# EUROPEAN PATENT APPLICATION

(11) **EP 2 101 443 A1**
(43) Date of publication of application: **16.09.2009**
(21) Application number: 08300143.8
(22) Date of filing: 14.03.2008
(51) Int. Cl.: H04L 12/24, H04L 12/56, H04N 7/173

(54) **Method for presenting logic link relationship between two network systems**

(71) Applicant: THOMSON Licensing, 92100 Boulogne-Billancourt (FR)
(72) Inventor: Zhuang, Zuijan, Li uptown 100101, BEIJING (CN)
(74) Representative: Ruellan-Lemonnier, Brigitte

(57) **Abstract**

The present invention relates a method for presenting logic link relationship between two network systems, the first network system comprising at least one first head end device each having at least one first terminal devices, the second network system comprising at least one second head end device connected to one of the first terminal devices and each second head end device having at least one second terminal device, the first and second network systems being managed by a server, wherein the method comprises the steps of: a second head end device broadcasting its network information to the first network system; a first head end device receiving the network information, and generating and maintaining management information of the second head end device that is connected with one of the first terminal devices of the first head end device; the server retrieving the management information of the second head end device; and the server creating an element in the network management system for the second head end device according to the retrieved management information to present a logic link relationship between devices of the first and second network systems. According to the method of the present invention, the logic link relationship between the networks can be automatically presented.

## Description

### FIELD OF THE INVENTION

This disclosure generally relates to network communication technology, more particularly, to a method for presenting logic link relationship between two network systems.

### BACKGROUND OF THE INVENTION

Historically, CATV is a type of unidirectional medium for broadcasting. One objective of its design is to broadcast analogy video channel to maximum subscribers under a minimum cost. Recently, it has been widely recognized that a high potential of capacity is provided for bidirectional data communication by the coaxial cable broadband technology, and various cable network systems have been developed and implemented.

In China, SARFT (the State Administration of Radio Film and Television) recommends to use EPON (Ethernet passive optical network) plus EOC (Ethernet over coaxial cable) technology as the broadband access solution for cable carriers.

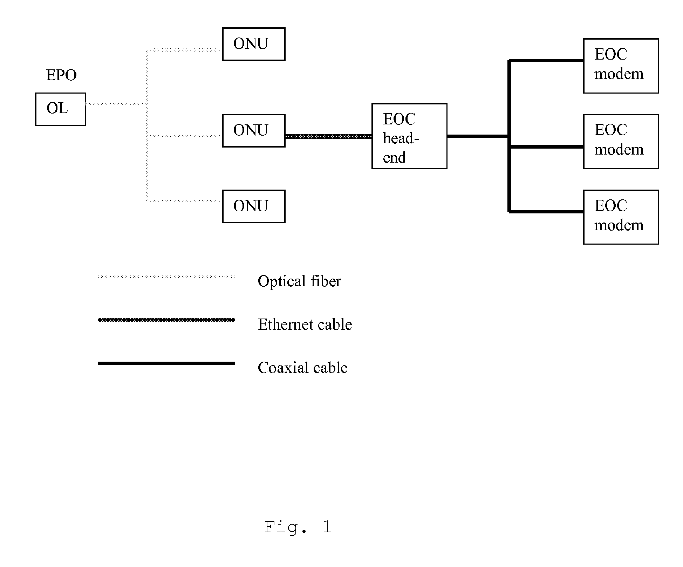

Fig. 1 is a schematic view illustrating the EPON plus EOC broadband access system.

As shown in Fig.1, an EPON network comprises a plurality of OLTs(optical line terminator) which are the head end devices of the EPON network. Each OLT has a plurality of terminal devices which are called ONUs (optical network unit). Each one of the ONUs is connected to at least one EOC head end devices through an Ethernet cable. Each ONU of the EOC network also has a plurality of terminal devices (in this figure, EOC modems).

In this EPON plus EOC broadband access system, ONUs of the EPON network transmit data signal to the buildings while EOC devices are connected with certain port of one of the ONUs and relay data signal to each house of the building.

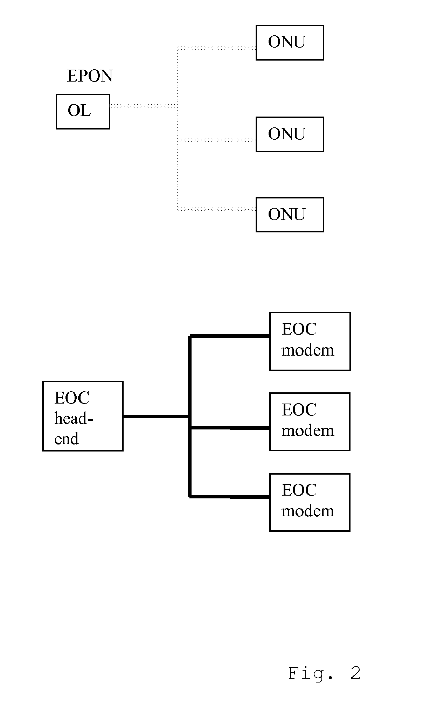

A demand increases concerning how to manage EPON devices and EOC devices in the same network EMS (element management system). Fig.2 shows a topology view of in the EMS for the conventional EPON plus EOC broadband access system. It can be seen from Fig.2 that the EPON network and the EOC network are managed independently because a topology view for the whole system can not be generated automatically.

Currently, administrator of EMS has to create/add network elements in topology view of EMS for EPON and EOC respectively. Because the EPON devices and EOC devices are managed independently, the logic link relationship such as which EOC device is connected with which port of which ONU has to be maintained by administrator manually.

The problem about current implementation of EMS is that there are so many EOC devices that should be added to EMS system manually by administrator. This is a very heavy load. Besides , there's no way to identify the logic link relationship automatically in the EMS.

Therefore, it is desirable to develop a method to find EOC devices and present these elements in EMS automatically and maintain the logic link relationship to administrator how the EOC devices and EPON ONUs are connected between each other.

### SUMMARY OF THE INVENTION

According to one object of the present invention, a method for presenting logic link relationship between two network systems is provided, in which the first network system comprises at least one first head end device each has at least one first terminal devices, the second network system comprises at least one second head end device connected to one of the first terminal devices and each second head end device has at least one second terminal device, the first and second network systems are managed by a server, wherein the method comprises the steps of:
a second head end device broadcasting its network information to the first network system;
a first head end device receiving the network information, and generating and maintaining management information of the second head end device that is connected with one of the first terminal devices of the first head end device;
the server retrieving the management information of the second head end device; and
the server creating an element in the network management system for the second head end device according to the retrieved management information to present a logic link relationship between devices of the first and second network systems.

Advantageously, the network information comprises the vendor name, device type, software version, management information base version, IP address and MAC address of the port sending the network information.

Advantageously, the management information is maintained by a management information base table which comprises said network information and index of the second head end device and the MAC address of the first terminal device connected to the second head end device.
Advantageously, the second head end device periodically broadcasts its network information to the first network system.
Advantageously, the server retrieves the management information of the second head end device via a simple network management protocol operation.
Advantageously, the logic link relationship between devices of the first and second network systems was shown in a topology view.

According to another aspect of the present invention, a method for presenting logic link relationship between two network systems is provided, in which the first network system comprises at least one first head end device each has at least one first terminal devices, the second network system comprises at least one second head end device connected to one of the first terminal devices and each second head end device has at least one second terminal device, the first and second network systems are managed by a server, wherein the method comprises the steps of:
a first terminal device broadcasting its network information which includes at least the MAC address of the first terminal device to the second network system;
after receiving the network information, a second head end device which is connected to the first terminal device generating and maintaining management information of the second head end device incorporating the above received network information of the first terminal device;
the second head end device sending a message including the management information to the server; and
the server receiving the message and creating an element in the network management system for the second head end device according to the management information to present a logic link relationship between devices of the first and second network systems.

Advantageously, the network information of the first terminal device further comprises the vendor name, device type, software version, management information base version, and IP address of the port sending the network information of the first terminal device.
Advantageously, the management information is maintained by a management information base table which comprises said network information of the first terminal device.
Advantageously, the server walks through the management information base table of the second head end device to get the network information of the second head end device.
Advantageously, the network information of the second head end device comprise the vendor name, device type, software version, management information base version, IP address and MAC address of the second head end device and the IP address of the port of the first terminal device connected to the second head end device.
Advantageously, the first terminal device broadcasts its network information to the second network system periodically.
Advantageously, the message is a trap message.

Advantageously, the logic link relationship between devices of the first and second network systems was shown in a topology view.

### BRIEF DESCRIPTION OF DRAWINGS

Fig. 1 is a schematic diagram illustrating the EPON plus EOC broadband access system.
Fig.2 is a schematic diagram illustrating a topology view of in the EMS for the conventional EPON plus EOC broadband access system.
Fig.3 shows the format of packet according to the embodiments of the present invention.

### DETAILED DESCRIPTION OF PREFERRED EMBODIMENTS

The technical features of the present invention will be described further with reference to the embodiments. The embodiments are only preferable examples without being limited to the present invention. It will be well understood by the skilled person in the art upon reading the following detailed description in conjunction with the accompanying drawings.
Embodiments of the present invention provide a method for presenting logic link relationship between the EPON network and the EOC network in the EPON plus EOC broadband access system.
According to the first embodiment of the present invention, a method for presenting logic link relationship between the EPON network and the EOC network in the EPON plus EOC broadband access system is provided.
In this embodiment, firstly each EOC head end device broadcasts its information to EPON system.
Each EPON OLT receives and maintains all the information about EOC head end devices that are connected with some of its ONUs.
Then EMS server retrieves information of EOC devices via SNMP (simple network management protocol) operation after OLT element is created in EMS server. It should be noted that although in this embodiment the SNMP is used, other protocols are also applicable according to the type and requirements of the network.
EMS server creates elements for discovered EOC devices in the EMS system and presents the logic link relationship between EOC devices and EPON ONUs.
The first embodiment of the present invention will be described in more detail.
It should be noted that the protocol defined in this invention is called "Thomson Discovery Protocol", which is also named TDP for short.

In the first embodiment of the present invention, firstly the EOC head end devices periodically broadcast TDP packets (for example, every 30 seconds) in the management VLAN (Virtual Local Area Network) to the EPON network side. Although in this embodiment the EOC head end devices periodically broadcast the TDP packets, it can be understood by a person skilled in the art that other automatic broadcast manners by some trigger conditions are also applicable.
The TDP protocol is defined as following:
a. this protocol is based on Ethernet layer, not IP layer;
b. the destination MAC address of TDP packet is ff:ff:ff:ff:ff:ff;
c. the ether_type defined in TDP protocol is 0x0111;
d. TDP packets are broadcasted in the in-band management VLAN;
e. the payload of TDP protocol is composed by multiple Type-length-value triads.

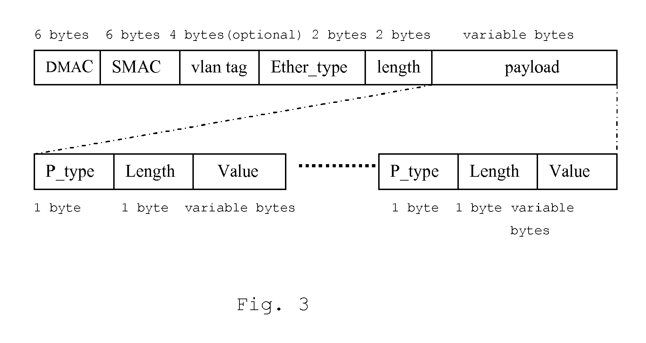

Fig.3 shows the format of whole TDP packet. As shown in Fig.3, the length field following ether-type field defines how long the payload part of TDP packet is in unit byte. Payload part consists of multiple Type-Length-Value triads. P_type field defines the property this triad describes while the length field in triad defines how long the value field is in unit byte. The value field contains the detail value of this property.

P_type is defined as below:

| | |
|---|---|
| 0x01: | vendor name; |
| 0x02: | device-type; |
| 0x03: | product type; |
| 0x04: | software version; |
| 0x05: | MIB version; |
| 0x06: | IP address of this device; |
| 0x07: | MAC address of the port from which this packet is sent out; |
| 0x08-0xff, 0x00: | reserved |

For device-type property, the length is fixed 1 byte, and the value is defined as below:

| | |
|---|---|
| 0x01: | BICA (Bi-directional Coaxial cable Alliance, providing types of EOC using WiFi chipset) head end device; |
| 0x02: | MoCA head end device; |
| 0x03: | HCNA head end device; |
| 0x04: | PLC head end device; |
| Other values: | reserved |

Each EOC head end is connected with one port of an ONU of EPON. If the ONU is a bridge type device, the TDP packets will be forwarded to OLT of EPON.
OLT receives and terminates the TDP packets and maintains one SNMP MIB (Management Information Base) table:eocDeviceTable which consists of the following items:
eocDevicelndex
eocDeviceLinkedOnuMac
eocDeviceVendorName
eocDeviceProductType
eocDeviceSwVersion
eocDeviceMibVersion
eocDevicelpAddress
eocDeviceMacAddress

If ONU that EOC head end connects is a complicated devices, for example a layer 3 device rather than a bridge device, this ONU can maintain the same SNMP MIB table: eocDeviceTable; this ONU will be managed by EMS system as a standalone SNMP agent entity.
After OLT (or ONU) element is created in the central SNMP EMS system, EMS will walk through the whole MIB of OLT device and then get the EOC device information. EMS will create an element for the EOC head end device in topology view using the eocDevicelpAddress. EM S can easily identify this EOC head end is connected with which ONU, and EMS can also find out EOC head end is connected with which port of this ONU by searching the Forwarding Information Table of ONU indexed by eocDeviceMacAddress.

According to the second embodiment of the present invention, a method for presenting logic link relationship between the EPON network and the EOC network in the EPON plus EOC broadband access system is provided.
In the second embodiment, each ONU device that connects with EOC head end broadcast its information to EOC system periodically. The information includes the MAC address of ONU. Although in this embodiment the ONU device periodically broadcast the information, it can be understood by a person skilled in the art that other automatic broadcast manners by some trigger conditions are also applicable.
EOC head end device which is connected to the ONU device records the information of ONU device and generating and maintaining management information of the EOC head end device.
The EOC head end device sends a message (in this case, a trap message) including the management information to EMS server, the trap message indicates the following information: eocDeviceProductType, eocDeviceVendorName, eocDeviceSwVersion, eocDeviceMibVersion, eocDeviceMacAddress,eocDeviceLinkedOnuMac.
EMS server receives trap message issued by EOC head end devices and creates network elements for an EOC head end to present the logic link relationship between EOC and EPON ONU.
The second embodiment of the present invention will be described in more detail.

Firstly, each ONU device that connects with EOC head end broadcasts its information to EOC system periodically. The information at least includes the MAC address of the ONU device. A packet which is located in an Ethernet frame with special ether_type such as 0x0111 can be used. The format of this packet can take the same syntax as TDP protocol elaborated in the first embodiment. The information conveyed in this packet includes: device_type is ONU, the vendor name of this ONU, the MAC address of this ONU.
EOC head end device receives and terminates this packet from ONU. After decoding this packet, the EOC device maintains a SNMP MIB table eocDeviceTable which consists of the following items:
eocDeviceLinkedOnu
eocDeviceVendorName
eocDeviceProductType
eocDeviceSwVersion
eocDeviceMibVersion
eocDevicelpAddress
eocDeviceMacAddress
EMS server address is preconfigured in EOC head end device.
EOC head end device send a trap message to EMS server once it obtains the uplink ONU MAC address.
EMS server receives and decodes this type of trap message and find out the existing SNMP agent entities that function as EOC head end device. That is, the EMS server creates an element for EOC head end devices to present a logic link relationship between devices of the EPON and EOC network systems.
From the above, we can see that EMS server can create the EOC head end device in topology view using the eocDevicelpAddress. Thus EMS can easily identify with which ONU this EOC head end is connected, and EMS can also find out with which port of this ONU the EOC head end is connected by searching the Forwarding Information Table of ONU indexed by eocDeviceMacAddress.

According to the present invention, a method is provided to automatically present logic link relationship between devices in the EPON plus EOC broadband access system.
Although the present invention is described with reference to the EPON plus EOC broadband access system, it is obvious for a person skilled in the art that the present invention is applicable in other systems comprising two networks for presenting logic link relationship between the two networks.

## Claims

1. A method for presenting logic link relationship between two network systems, the first network system comprising at least one first head end device each having at least one first terminal devices, the second network system comprising at least one second head end device connected to one of the first terminal devices and each second head end device having at least one second terminal device, the first and second network systems being managed by a server,
**characterized in that** the method comprises the steps of:
a second head end device broadcasting its network information to the first network system;
a first head end device receiving the network information, and generating and maintaining management information of the second head end device that is connected with one of the first terminal devices of the first head end device;
the server retrieving the management information of the second head end device; and
the server creating an element in the network management system for the second head end device according to the retrieved management information to present a logic link relationship between devices of the first and second network systems.

2. The method according to the claim 1, **characterized in that** the network information comprises the vendor name, device type, software version, management information base version, IP address and MAC address of the port sending the network information.

3. The method according to claim 2, **characterized in that** the management information is maintained by a management information base table which comprises said network information and index of the second head end device and the MAC address of the first terminal device connected to the second head end device.

4. The method according to claim 1, **characterized in that** the second head end device periodically broadcasts its network information to the first network system.

5. The method according to claim 1, **characterized in that** the server retrieves the management information of the second head end device via a simple network management protocol operation.

6. The method according to claim 1, **characterized in that** the logic link relationship between devices of the first and second network systems was shown in a topology view.

7. A method for presenting logic link relationship between two network systems, the first network system comprising at least one first head end device each having at least one first terminal devices, the second network system comprising at least one second head end device connected to one of the first terminal devices and each second head end device having at least one second terminal device, the first and second network systems being managed by a server,
**characterized in that** the method comprises the steps of:
a first terminal device broadcasting its network information which includes at least the MAC address of the first terminal device to the second network system;
after receiving the network information, a second head end device which is connected to the first terminal device generating and maintaining management information of the second head end device incorporating the above received network information of the first terminal device;
the second head end device sending a message including the management information to the server; and
the server receiving the message and creating an element in the network management system for the second head end device according to the management information to present a logic link relationship between devices of the first and second network systems.

8. The method according to claim 7, **characterized in that** the network information of the first terminal device further comprises the vendor name, device type, software version, management information base version, and IP address of the port sending the network information of the first terminal device.

9. The method according to claim 8, **characterized in that** the management information is maintained by a management information base table which comprises said network information of the first terminal device.

10. The method according to claim 9, **characterized in that** the server walks through the management information base table of the second head end device to get the network information of the second head end device.

11. The method according to claim 10, **characterized in that** the network information of the second head end device comprise the vendor name, device type, software version, management information base version, IP address and MAC address of the second head end device and the IP address of the port of the first terminal device connected to the second head end device.

12. The method according to claim 7, **characterized in that** the first terminal device broadcasts its network information to the second network system periodically.

13. The method according to claim 7, **characterized in that** the message is a trap message.

14. The method according to claim 7, **characterized in that** the logic link relationship between devices of the first and second network systems was shown in a topology view.
